# EUROPÄISCHE PATENTSCHRIFT

(11) **EP 2 399 038 B1**
(45) Veröffentlichungstag und Bekanntmachung des Hinweises auf die Patenterteilung: **24.12.2014**
(21) Anmeldenummer: 10704503.1
(22) Anmeldetag: 04.02.2010
(51) Int. Cl.: F16B 5/02

(54) **DÄMPFUNGSVORRICHTUNG**
DAMPENING DEVICE
DISPOSITIF D'AMORTISSEMENT

(30) Priorität: 21.02.2009 DE 102009010060
(43) Veröffentlichungstag der Anmeldung: 28.12.2011
(73) Patentinhaber: fischerwerke GmbH & Co. KG, 72178 Waldachtal (DE)
(72) Erfinder: LINKA, Martin, 72160 Horb a.N. (DE); BÖHMEL, Philipp, 70565 Stuttgart (DE)
(86) Internationale Anmeldenummer: PCT/EP2010/000680
(87) Internationale Veröffentlichungsnummer: WO 2010/094402

(56) Entgegenhaltungen:
- DE-A1-102007 032 313
- US-A1- 2004 227 311

## Beschreibung

Die Erfindung betrifft eine Dämpfungsvorrichtung gemäß dem Oberbegriff des Anspruchs 1. Sie dient zur Befestigung eines Bauteils an einem Ankergrund mit Hilfe eines Ankers. Das Bauteil kann allgemein auch als "zu befestigender Gegenstand" bezeichnet werden und weist beispielsweise ein Loch zum Aufsetzen auf den Anker auf bzw. eine Anzahl Löcher zum Aufsetzen auf mehrere Anker. Der Ankergrund besteht beispielsweise aus Mauerwerk, Beton, Fels oder Stein. Für solche Befestigungen verwendete Anker sind üblicherweise stangenförmig und weisen ein Gewinde an einem Ende oder über ihre gesamte Länge auf, das in verankertem Zustand aus dem Ankergrund vorsteht und das nachfolgend als "hinteres Ende" bezeichnet wird. Nach Aufsetzen des Bauteils auf den Anker wird das Bauteil durch Aufschrauben und Anziehen einer Mutter auf das Gewinde des Ankers gegen den Ankergrund gespannt. Die Verankerung, also die Befestigung des Ankers im Ankergrund, erfolgt üblicherweise mechanisch oder chemisch. Eine mechanische Verankerung erfolgt durch Aufspreizen einer Spreizhülse oder eines Spreizdübels in einem nicht-hinterschnittenen oder einem hinterschnittenen, üblicherweise durch Bohren hergestellten Loch. Die chemische Verankerung ist eine stoffschlüssige Verankerung durch Einkleben oder Einmörteln eines Ankers in einem Loch im Ankergrund.

Das gegen den Ankergrund gespannte Bauteil hält quer zum Anker, d.h. parallel zu einer Oberfläche des Ankergrunds, durch Reibschluss am Ankergrund. Erst bei einer hohen Beanspruchung, die hier als Überlastung bezeichnet wird, überwindet das Bauteil die Reibkraft und verschiebt sich auf dem Ankergrund. Was hier als Überlastung bezeichnet wird, führt nicht zu einer Zerstörung der Verankerung, sondern wie erwähnt zu einer Verschiebung des befestigten Bauteils auf dem Ankergrund. Solche Überlastungen treten beispielsweise bei Erdbeben auf. Die Dämpfungsvorrichtung kann die zum Verschieben des Bauteils auf dem Ankergrund erforderliche Kraft erhöhen. Ihr eigentlicher Zweck oder jedenfalls ein Zweck ist allerdings, die auf den Anker und auf das Bauteil wirkenden Belastungen bei einer Überlastung zu verringern, indem eine (begrenzte) Verschiebung des Bauteils auf dem Ankergrund ermöglicht und der Verschiebung zugleich entgegengewirkt wird. Es werden beispielsweise Stoßbeanspruchungen des Bauteils, wie sie bei Erdbeben auftreten können, gemindert.

Aus der Offenlegungsschrift DE 101 34 809 A1 ist eine Unterlegscheibe als Reibkraftverstärker bekannt, die kantige Körner aus einem harten Material wie beispielsweise Korund oder Hartmetall aufweist, die aus der Scheibe vorstehen. Die Unterlegscheibe wird zwischen dem Ankergrund und dem zu befestigenden Bauteil auf einen im Ankergrund verankerten und aus dem Ankergrund vorstehenden, stangenförmigen Anker aufgesetzt und es wird das Bauteil gegen den Ankergrund gespannt. Die aus der Unterlegscheibe vorstehenden Körner drücken sich beim Spannen des Bauteils gegen den Ankergrund in die einander zugewandten Oberflächen des Ankergrunds und des Bauteils ein und erhöhen die Reibung zwischen dem Bauteil und dem Ankergrund. Die Unterlegscheibe vergrößert die Kraftübertragung zwischen dem Bauteil und dem Ankergrund parallel zu ihren einander zugewandten Oberflächen, also quer bzw. radial zum Anker, dessen Querbeanspruchung dadurch verringert wird. Auf den Ankergrund einwirkende Stöße werden allerdings mit unverminderter Stärke auf das befestigte Bauteil übertragen.

Die Offenlegungsschrift DE 33 31 097 A1 offenbart, ein Tellerfederpaket auf einen Anker aufzusetzen, über das der Anker das zu befestigende Bauteil gegen den Ankergrund spannt. Die Tellerfedern sollen die mit dem Anker aufgebrachte Vorspannung bei einer Relaxation aufrecht erhalten.

Eine vergleichbare Anordnung offenbart die Offenlegungsschrift DE 101 06 844 A1, bei der ebenfalls ein Tellerfederpaket auf einen Anker aufgesetzt wird. Das Tellerfederpaket ist in einem Käfig aufgenommen, der die Tellerfedern zusammenhält, bis der Käfig beim Setzen und Vorspannen des Ankers geöffnet wird. Dann kommen die Tellerfedern frei und spannen das zu befestigende Bauteil gegen den Ankergrund.

Die Offenlegungsschrift DE 196 25 176 A1 offenbart eine chemische Verankerung mit einem ringförmigen, elastischen Element, das auf einem vorderen Ende einer Ankerstange angeordnet ist. Das elastische Element befindet sich nahe einem Bohrlochgrund unterhalb eines Mörtels der chemischen Verankerung. Das elastische Element federt in axialer Richtung des Ankers, es wirkt einem Abbau der Vorspannung bei Relaxation entgegen und mindert die axiale Belastung des Ankers bei dynamischer Beanspruchung.

Aufgabe der Erfindung ist, eine Dämpfungsvorrichtung für die Befestigung eines Bauteils mit einem Anker an einem Ankergrund vorzuschlagen, das schockartige Querbeanspruchungen dämpft, wie sie beispielsweise bei Erdbeben vorkommen können.

Diese Aufgabe wird erfindungsgemäß durch die Merkmale des Anspruchs 1 gelöst. Die erfindungsgemäße Dämpfungsvorrichtung weist ein Gehäuse auf, in dem eine Elastomerhülse aufgenommen ist. Insbesondere bildet das Gehäuse eine Art Fassung für die Elastomerhülse. In gesetztem Zustand umschließen das Gehäuse und die Elastomerhülse einen Anker. Die Elastomerhülse ist im Gehäuse stauchbar, womit ein axiales Zusammendrücken der Elastomerhülse bzw. ein Zusammendrücken der Elastomerhülse in Längsrichtung des stangenförmigen Ankers gemeint ist. Durch das Stauchen weitet sich die Elastomerhülse radial auf, und zwar sowohl nach innen als auch nach außen. Sie ist dadurch innen am sie durchgreifenden Anker und außen im Gehäuse, in dem sie aufgenommen ist, spielfrei und sogar mit Vorspannung anlegbar. Die Spielfreiheit der Elastomerhülse nach dem Stauchen hat den Vorteil einer Dämpfung ohne Leerweg, wobei die Dämpfung quer bzw. radial zum Anker, d.h. parallel zu den einander zugewandten Oberflächen des Ankergrunds und des am Ankergrund befestigten Bauteils wirkt. Ein weiterer Vorteil ist eine Zentrierwirkung der Dämpfungsvorrichtung durch das Stauchen der Elastomerhülse.

Die erfindungsgemäße Dämpfungsvorrichtung weist eine Durchführungsöffnung für einen stangenförmigen Anker auf, insgesamt ist die Dämpfungsvorrichtung beispielsweise ring- oder hülsenförmig. Die Elastomerhülse ist elastisch oder jedenfalls vorwiegend elastisch. Ein eventuelles zusätzliches plastisches Verhalten der Elastomerhülse kann die Dämpfungswirkung weiter verbessern, wobei plastisch verformte Anteile bei einer erneuten Beanspruchung nicht mehr zur Dämpfung beitragen. Ein Volumen der Elastomerhülse kann zumindest näherungsweise als inkompressibel angesehen werden. Durch das Stauchen füllt die Elastomerhülse einen ringförmigen, den die Dämpfungsvorrichtung durchgreifenden Anker umgebenden Hohlraum im Gehäuse der Dämpfungsvorrichtung aus und ist wie bereits beschrieben innen am Anker und außen im Gehäuse spielfrei anlegbar. Die Stauchkraft lässt sich erhöhen um eine Vorspannung einzustellen, mit der die Elastomerhülse innen am Anker und außen im Gehäuse anliegt. Durch die Stauchkraft ist eine Dämpfung der Elastomerhülse und damit der erfindungsgemäßen Dämpfungsvorrichtung einstellbar.

Eine Ausgestaltung der Erfindung sieht einen Schraubverschluss vor, der auf das Gehäuse aufschraubbar oder in das Gehäuse einschraubbar ist. Durch Aufschrauben des Schraubverschluss auf das Gehäuse oder Einschrauben in das Gehäuse ist die Elastomerhülse stauchbar, so dass sie, wie bereits beschrieben, innen spielfrei an einen die Dämpfungsvorrichtung durchgreifenden, stangenförmigen Anker und außen spielfrei im Gehäuse anlegbar und eine Vorspannung, mit der die Elastomerhülse innen am Anker und außen im Gehäuse anliegt, einstellbar ist.

Eine Ausgestaltung der Erfindung sieht einen vom Gehäuse nach außen stehenden Übergriff vor. Es kann sich dabei um einen Radialflansch oder eine Ringstufe handeln. Auch ist eine nach außen stehende Nase, Lasche oder dgl. möglich. Vorzugsweise werden mindestens zwei nach außen stehende Nasen, Laschen oder dgl. einander gegenüberliegend oder mehr als zwei nach außen stehende Nasen, Laschen oder dgl., die über den Umfang des Gehäuses gleich- oder ungleichmäßig verteilt angeordnet sind, vorgesehen. In gesetztem Zustand übergreift der Übergriff des Gehäuses das befestigte Bauteil auf einer dem Ankergrund abgewandten Außenseite. Mittels des Übergriffs wird das Bauteil gegen den Untergrund gespannt, um einen Reibschluss zwischen dem Bauteil und dem Ankergrund zu erzielen. Die Dämpfungsvorrichtung soll an sich nicht gegen den Ankergrund gespannt werden, da der Lastabtrag vom Bauteil unmittelbar in den Ankergrund erfolgen soll und nicht mittelbar über die Dämpfungsvorrichtung.

Die Erfindung wird nachfolgend anhand in der Zeichnung dargestellter Ausführungsbeispiele näher erläutert. Es zeigen:

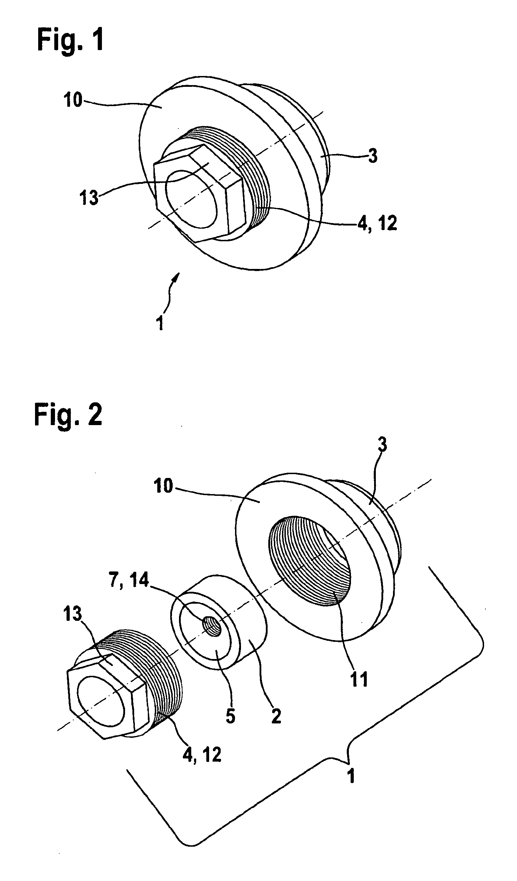

- Figur 1: eine erfindungsgemäße Dämpfungsvorrichtung in perspektivischer Darstellung;
- Figur 2: die Dämpfungsvorrichtung aus Figur 1 in perspektivischer Explosionsdarstellung;

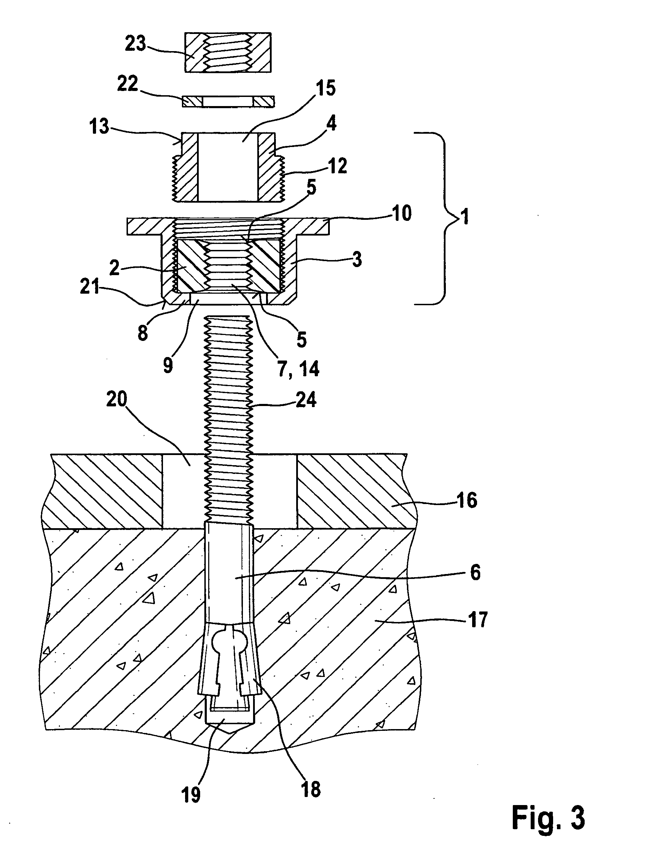

- Figur 3: einen Achsschnitt der Dämpfungsvorrichtung aus Figur 1 in Explosionsdarstellung; und
- Figur 4: einen Achsschnitt der Dämpfungsvorrichtung aus Figur 1 in zusammengesetztem Zustand.

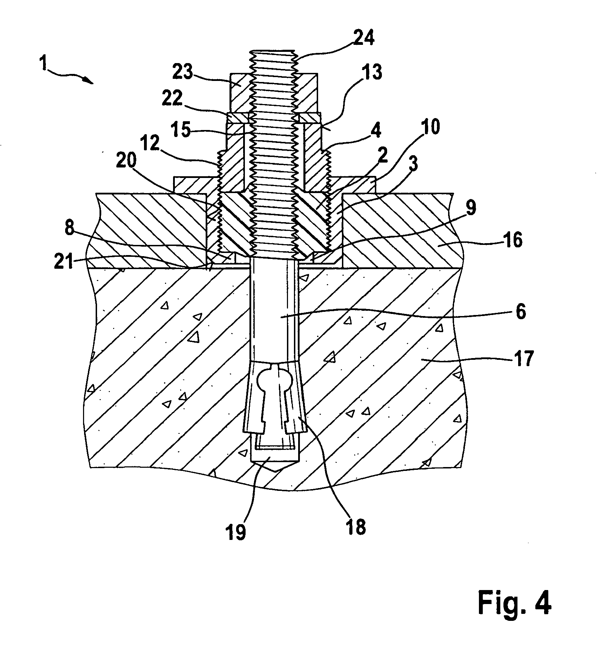

Die in der Zeichnung dargestellte, erfindungsgemäße Dämpfungsvorrichtung 1 weist eine Elastomerhülse 2, ein Gehäuse 3 und einen Schraubverschluss 4 auf. Die Elastomerhülse 2 weist einen näherungsweise quadratischen Ringquerschnitt und flache konische Ansenkungen 5 auf ihren beiden Stirnseiten auf. Die Elastomerhülse 2 kann auch als Elastomerring aufgefasst werden, es kommt weniger auf die Form der Elastomerhülse 2 an, als vielmehr auf ihre dämpfende Eigenschaft und darauf, einen sie durchgreifenden Anker 6 zu umschließen und einen den Anker 6 im Gehäuse 3 umgebenden Ringraum in gesetztem Zustand auszufüllen (Figur 4). Die Elastomerhülse 2 kann an ihrer Innenseite ein Gewinde oder eine umlaufende Rillung 7 für den Eingriff mit einem Gewinde 24 des Ankers 6 aufweisen, ein solches Gewinde oder eine Rillung 7 ist jedoch nicht zwingend. Auch auf der Außenseite der Elastomerhülse 2 ist ein Gewinde oder eine umlaufende Rillung möglich, wenn auch im dargestellten Ausführungsbeispiel nicht vorhanden. Die Elastomerhülse 2 ist elastisch, jedenfalls vorwiegend elastisch verformbar und kann, zumindest näherungsweise, als inkompressibel angesehen werden.

Das Gehäuse 3 ist rohrförmig und weist einen lochscheibenförmigen Boden 8 auf, dessen Mittelloch 9 einen größeren Durchmesser als die Elastomerhülse 2 aufweist. Am anderen Stirnende weist das Gehäuse 3 einen nach außen stehenden Radialflansch 10 und es weist ein Innengewinde 11 auf. Das Gehäuse 3 kann beispielsweise aus Stahl oder einem anderen Metall oder aus einem Kunststoff bestehen.

Der Schraubverschluss 4 ist rohrförmig, er weist ein Außengewinde 12, mit dem er in das Innengewinde 11 des Gehäuses 3 einschraubbar ist, und einen Sechskant 13 zu einem formschlüssigen Ansetzen eines Drehwerkzeugs auf. Der Schraubverschluss 4 besteht beispielsweise aus Stahl oder einem anderen Metall oder aus Kunststoff. Ein axial durchgehendes Innenloch 14 der Elastomerhülse 2, das rohrförmige Gehäuse 3 und das Mittelloch 9 seines Bodens 8 sowie ein axiales Durchgangsloch 15 des Schraubverschluss 4 bilden eine Durchführungsöffnung der Dämpfungsvorrichtung 1 für den stangenförmigen Anker 6.

Figur 4 zeigt die Befestigung eines Bauteils 16 an einem Ankergrund 17 mit dem stangenförmigen Anker 6. Der Anker 6 ist ein Spreizanker mit einer aufspreizbaren Spreizhülse 18, er ist in ein Bohrloch 19 im Ankergrund 17 eingebracht und zur Verankerung aufgespreizt. Der Anker 6 steht aus dem Ankergrund 17 vor. Das Bauteil 16 weist ein zylindrisches Durchgangsloch 20 auf, dessen Durchmesser einem Außendurchmesser des Gehäuses 3 entspricht. Um das Gehäuse 3 einfacher in das Durchgangsloch 20 im Bauteil 16 einbringen zu können, weist das Gehäuse 3 eine Fase 21 auf. Das Gehäuse 3 ist bis zu einer Unterseite seines Flanschs 10 axial kürzer als das Bauteil 16 dick ist, so dass es in gesetztem Zustand nicht auf dem Ankergrund 17 aufsitzt (Figur 4). Das Bauteil 16 wird mit seinem Durchgangsloch 20 auf den aus dem Ankergrund 17 vorstehenden Anker 6 aufgesetzt und das Gehäuse 3 mit der einliegenden Elastomerhülse 2 wird auf den Anker 6 aufgesetzt und in das Durchgangsloch 20 im Bauteil 16 eingebracht. Der Schraubverschluss 4 kann beim Aufsetzen auf den Anker 6 in das Innengewinde 11 des Gehäuses 3 eingeschraubt sein oder anschließend eingeschraubt werden. Nach dem Aufsetzen auf den Anker 6 wird der Schraubverschluss 4 so in das Gehäuse 3 eingeschraubt, dass er die Elastomerhülse 2 staucht, d.h. axial verkürzt. Dadurch weitet sich die Elastomerhülse 2, die, zumindest näherungsweise, als inkompressibel angesehen werden kann, radial auf, ihr Innendurchmesser verkleinert und ihr Außendurchmesser vergrößert sich. Dadurch wird die Elastomerhülse 2 nach innen gegen den Anker 6 gespannt und formt sich in dessen Gewinde 24 ein und die Elastomerhülse 2 wird nach außen gegen das Gehäuse 3 gespannt und formt sich in dessen Innengewinde 11 ein. Das Gehäuse 3 der Dämpfungsvorrichtung 1 umschließt die Elastomerhülse 2 wie eine Fassung. Die Elastomerhülse 2 liegt innen spielfrei am Anker 6 und außen spielfrei im Gehäuse 3 an. Eine Vorspannung, mit der die Elastomerhülse 2 nach innen und nach außen drückt, lässt sich durch Drehen des Schraubverschlusses 4 im Innengewinde 11 des Gehäuses 3 verändern. Eine durch Relaxation der Elastomerhülse 2 abnehmende Vorspannung kann durch Nachziehen des Schraubverschlusses 4 nachjustiert werden.

Nach dem Stauchen und eventuellen Vorspannen der Elastomerhülse 2 durch Einschrauben des Schraubverschlusses 4 in das Gehäuse 3 der erfindungsgemäßen Dämpfungsvorrichtung 1 wird eine Unterlegscheibe 22 aufgesetzt und eine Mutter 23 auf das Gewinde 24 des Ankers 6 aufgeschraubt. Dabei wird der Schraubverschluss 4 gegengehalten, damit er sich nicht mit der Mutter 23 mitdreht oder der Schraubverschluss 4 wird nach dem Stauchen und eventuellen Vorspannen der Elastomerhülse 2 im Gehäuse 3 drehgesichert, beispielsweise mit einem Drehsicherungslack oder durch Einschlagen eines Prägepunkts oder dgl" also eine plastische Verformung des Gehäuses 3 und/oder des Schraubverschlusses 4 im Bereich ihres Übergangs, die den Schraubverschluss 4 gegen Drehen am Gehäuse 3 sichert. Durch Festziehen der Mutter 23 wird das zu befestigende Bauteil 16 gegen den Ankergrund 17 gespannt und dadurch am Ankergrund 17 befestigt. Die Mutter 23 spannt das Bauteil 16 über die Unterlegscheibe 22, den Schraubverschluss 4 und den Radialflansch 10 des Gehäuses 3 gegen den Ankergrund 17, das Gehäuse 3 sitzt, wie in Figur 4 zu sehen, nicht auf dem Ankergrund 17 auf. Allgemein kann der Radialflansch 10 als Übergriff aufgefasst werden, der in gesetztem Zustand das am Ankergrund 17 befestigte Bauteil 16 auf einer dem Ankergrund 17 abgewandten Seite übergreift und gegen den Ankergrund 17 spannt. Ein Innendurchmesser der Elastomerhülse 2 kann, wie im Ausführungsbeispiel, kleiner als ein Durchmesser des Ankers 6, insbesondere eines Gewindes 24 des Ankers 6 sein. Das ist allerdings nicht zwingend, der Innendurchmesser der Elastomerhülse 2 kann auch gleich groß oder größer wie der Durchmesser des Ankers 6, insbesondere seines Gewindes 24 sein. Durch das Stauchen der Elastomerhülse 2 durch Einschrauben des Schraubverschlusses 4 in das Gehäuse 3 wird die Elastomerhülse 2 wie bereits beschrieben nach innen gegen den Anker 6 gespannt und liegt spielfrei an ihm an, wobei durch Anziehen des Schraubverschlusses 4 eine Vorspannung aufbringbar ist. Über die Elastomerhülse 2 zentriert die Dämpfungsvorrichtung 1 das Durchgangsloch 20 des Bauteils 16 auf dem Anker 6, das Bauteil 16 ist spielfrei am Anker 6 festgelegt.

Das mit der Mutter 23 gegen den Ankergrund 17 gespannte Bauteil 16 ist durch Reibung gegen Verschiebung am Ankergrund 17 gehalten. Wird die Reibung zwischen dem Bauteil 16 und dem Ankergrund 17 bei hohen Belastungen überwunden, wie sie beispielsweise bei einem Erdbeben auftreten können, verschiebt sich das Bauteil 16 gegenüber dem Ankergrund 17. Zu dieser Verschiebung muss die Elastomerhülse 2 verformt werden und dämpft dadurch die Verschiebung des Bauteils 16 gegenüber dem Ankergrund 17.

## Patentansprüche

1. Dämpfungsvorrichtung, mit einer Durchführungsöffnung für einen stangenförmigen Anker (6), **dadurch gekennzeichnet, dass** die Dämpfungsvorrichtung (1) ein Gehäuse (3) aufweist, in dem eine Elastomerhülse (2) aufgenommen ist, die in gesetztem Zustand den Anker (6) umschließt, und dass die Elastomerhülse (2) im Gehäuse (3) stauchbar ist, so dass sie sich radial aufweitet und dadurch sowohl innen am Anker (6) als auch außem im Gehäuse (3) spielfrei ist.

2. Dämpfungsvorrichtung nach Anspruch 1, **dadurch gekennzeichnet, dass** das Gehäuse (3) einen Schraubverschluss (4) aufweist, und dass die Elastomerhülse (2) durch Schrauben des Schraubverschluss (4) stauchbar ist.

3. Dämpfungsvorrichtung nach Anspruch 1, **dadurch gekennzeichnet, dass** das Gehäuse (3) einen nach außen stehenden Übergriff (10) aufweist, der in gesetztem Zustand ein zu befestigendes Bauteil (16) übergreift.

## Claims

1. Damping device, having a feed-through opening for a rod-like anchor (6), **characterized in that** the damping device (1) has a housing (3) in which there is accommodated an elastomeric sleeve (2) which in the installed state encircles the anchor (6), and the elastomeric sleeve (2) is compressible in the housing (3), so that it expands radially and, as a result, is without play both on the inside against the anchor (6) and on the outside against the housing (3).

2. Damping device according to claim 1, **characterized in that** the housing (3) has a screw closure (4), and the elastomeric sleeve (2) is compressible by screwing of the screw closure (4).

3. Damping device according to claim 1, **characterized in that** the housing (3) has an outwardly projecting overlying element (10) which in the installed state overlies a component (16) to be fixed.

## Revendications

1. Dispositif d'amortissement, avec une ouverture de passage pour un ancrage (6) en forme de tige, **caractérisé en ce que** le dispositif d'amortissement (1) présente un boîtier (3) dans lequel est reçu un manchon en élastomère (2) qui, dans l'état installé, entoure l'ancrage (6), et **en ce que** le manchon en élastomère (2) peut être comprimé dans le boîtier (3), de sorte qu'il s'élargit radialement et se trouve ainsi sans jeu tant intérieurement contre l'ancrage (6) qu'extérieurement dans le boîtier (3).

2. Dispositif d'amortissement selon la revendication 1, **caractérisé en ce que** le boîtier (3) présente une fermeture à vis (4), et **en ce que** le manchon en élastomère (2) peut être comprimé par vissage de la fermeture à vis (4).

3. Dispositif d'amortissement selon la revendication 1, **caractérisé en ce que** le boîtier (3) présente une partie de recouvrement (10) qui fait saillie vers l'extérieur et qui, dans l'état installé, engage en recouvrement un élément de construction (16) à fixer.
